# EUROPEAN PATENT APPLICATION

(11) **EP 3 663 331 A1**
(43) Date of publication of application: **10.06.2020**
(21) Application number: 18209831.9
(22) Date of filing: 03.12.2018
(51) Int. Cl.: C08J 3/18, A22C 13/00, C08J 3/12, C08F 6/00, C08K 3/26, C08K 5/09, C08K 5/098, C08K 3/30

(54) **A MODIFIED POLY(VINYL ALCOHOL) AND CASING CONTAINING THE SAME**

(71) Applicant: Podanfol S.A., 64-800 Chodziez (PL)
(72) Inventor: LEVANICHEV, Vitalii, 64-920 Pila (PL); WOZNIAK, Olaf, 64-800 Chodziez (PL)
(74) Representative: Féaux de Lacroix, Stefan

(57) **Abstract**

A modified poly(vinyl alcohol), characterized in that it is obtained by a process comprising the step of treating a mixture, comprising
- a solid state granular or powdered poly(vinyl alcohol) having a degree of hydrolysis of from 70 to 100 mol%, and having a number average molecular weight of from 20,000 to 100,000 g/mol, and having an initial water content of from 1 to 5 wt%, based on the sum of the poly(vinyl alcohol) and water, as component A,
- 0.05 to 3.0 wt%, based on the amount of the component A, of at least one granular or powered metal salt hydrate having a melting point in the range of from 25 to 125°C, the amount being based on the anhydrous salt, as component B,
- 0 to 37 wt%, based on the amount of component A, of at least one plasticizer different from water, as component C,
- 0 to 13 wt%, based on the amount of the component A, of at least one mineral anti-blocking additive, as component D,
at a temperature in the range of from 80 to 130°C in a stirred tank reactor with 2 to 9 Nm³ of air per 1 kg of the mixture, the air having a humidity of 5 to 18 g/Nm³, wherein the air is introduced at or near the bottom of the stirred tank reactor and vented at or near the top of the stirred tank reactor,
and wherein a pressure gradient is maintained inside the stirred tank reactor, the pressure at or near the top of the stirred tank reactor being at least 0.1 bar lower than the pressure at or near the bottom of the stirred tank reactor.

## Description

The invention relates to a modified poly(vinyl alcohol), a process for its preparation, its use, a casing containing the same, a process for producing the casing, and a food product stored therein.

Biopolymer-based casings such as cellulose, cellulose-fibrous, collagen and natural casings (animal casings) are mainly used for the production of smoked, cooked, semi-dry, raw and dry sausages and other foodstuffs with a permeability to allow either penetration of smoke and/or exchange of gases and water vapor loss which leads to drying: This selective permeability is the basic characteristic of bio-polymers and was not matched by synthetic polymer man-made casings until the turn of the century.

Only after 2000, semi-permeable polyamide-based casings highly modified with other polymers and made permeable to water vapor and/or smoke have been appearing on the markets worldwide. The food processing industry is increasingly interested to fine-tune its products in novel casings, and therefore a number of patent applications have been appearing in this field in the last years.

EP 2 796 047 A relates to a tubular film food casing, which is semi-permeable to smoke and water-vapor, comprising at least one layer (1), comprising a mixture of at least one semi-aromatic (co)polyamide with at least one water-soluble synthetic organic polymer, and optionally at least one plastifier. In a preferred casing, a partially or completely saponified poly(vinyl alcohol) and polyvinylpyrrolidone are combined.

There are different methods to modify a poly(vinyl alcohol) which is preferably employed in tubular film food casings. According to WO 2012/134347, a modified poly(vinyl alcohol) is obtained by treating a solid state poly(vinyl alcohol) with an inorganic peroxide compound.

WO 2014/104946 teaches a smooth surface multilayer tubular, biaxially oriented casing for food products, comprising a polyamide resin and a water-soluble resin, wherein the casing has at least two layers comprising from 15% to 70% of a polyamide resin and from 30% to 85% of at least one water-soluble resin.

WO 2017/039490 discloses a single- or multilayer film comprising at least one (co)polyamide and at least one poly(vinyl alcohol) of a specific composition.

EP 1 594 914 B1 relates to smoke-permeable, moisture-resistant tubular, biaxially oriented food casings comprising a mixture of at least one aliphatic (co)polyamide, at least one water-soluble synthetic polymer and a plasticizing aid comprising glycerol, mono- and diglycol, trimethylolpropane, a mono-, di- or triester of glycerol with carboxylic acids, formamide, acetamide, N,N-dimethylformamide or N,N-dimethylacetamide.

EP 0 004 587 B1 discloses thermoplastically processable, plasticizer-containing, pourable tack-free poly(vinyl alcohol) granules containing as plasticizer a polyhydric aliphatic alcohol having a boiling point above 250°C.

EP 0 332 318 B1 relates to a process for the production of a dry, flowable poly(vinyl alcohol) (PVA) resin blend capable of thermoplastic processing, comprising coating the PVA resin with a liquid plasticizer medium, and a dry powder coating medium.

The known poly(vinyl alcohol)s do not in all cases have a sufficient property profile for advanced casings, specifically tubular film food casings. The modified poly(vinyl alcohol)s shall have stable flow properties which allow them to be processed in the form of coarse-grained powders or granules which are ready to be fed into an extrusion dosing system. The stable flow properties in the extrusion dosing system allow for a very stable and even composition of a polyamide containing the poly(vinyl alcohol) without fluctuations of the amount of poly(vinyl alcohol).

Recent developments of sausage casing go in the direction of increasing the number of layer of a multilayer tubular film, as well as improved barrier properties and thermostability. The synthetic sausage casings should approach a natural behavior with regard to barrier properties against humidity and smoke, when compared to natural intestines. When producing traditional meat products, the casings should have a low barrier to moisture in accordance with natural products.

The objects underlying the present invention are to provide for the above-mentioned requirements.

The objects are achieved by a modified poly(vinyl alcohol), characterized in that it is obtained by a process comprising the step of treating a mixture, comprising
- a solid state granular or powdered poly(vinyl alcohol) having a degree of hydrolysis of from 70 to 100 mol%, and having a number average molecular weight of from 20,000 to 100,000 g/mol, and having an initial water content of from 1 to 5 wt%, based on the sum of the poly(vinyl alcohol) and water, as component A,
- 0.05 to 3.0 wt%, based on the amount of the component A, of at least one granular or powered metal salt hydrate having a melting point in the range of from 25 to 125°C, the amount being based on the anhydrous salt, as component B,
- 0 to 37 wt%, based on the amount of component A, of at least one plasticizer different from water, as component C,
- 0 to 13 wt%, based on the amount of the component A, of at least one mineral anti-blocking additive, as component D,
at a temperature in the range of from 80 to 130°C in a stirred tank reactor with 2 to 9 Nm³ of air per 1 kg of the mixture, the air having a humidity of 5 to 18 g/Nm³, wherein the air is introduced at or near the bottom of the stirred tank reactor and vented at or near the top of the stirred tank reactor,
and wherein a pressure gradient is maintained inside the stirred tank reactor, the pressure at or near the top of the stirred tank reactor being at least 0.1 bar lower, preferably at least 0.3 bar lower than the pressure at or near the bottom of the stirred tank reactor.

The objects are furthermore achieved by a process for the production of this modified poly(vinyl alcohol), wherein the above process step is performed.

The object is furthermore achieved by the use of the modified poly(vinyl alcohol) as an additive in water vapor- and smoke-permeable synthetic food casings.

The object is furthermore achieved by a water vapor- and smoke-permeable synthetic food casing comprising one or more layers, wherein at least one layer comprises this modified poly(vinyl alcohol) and a polyamide.

The present invention also relates to the tubular film casing for food product comprising a tubular film casing as defined above, filled with the solid or paste-like foodstuff.

According to the present invention, it has been found that by applying a specific process for modifying a poly(vinyl alcohol), a granular or powdered poly(vinyl alcohol) can be obtained which has advantageous properties when employed in polyamide sausage casings. Since the modified granular or powdered poly(vinyl alcohol) agglomerate has stable flow properties, it can be mixed easily with the polyamide base resin in an extruder.

The modified poly(vinyl alcohol) allows to prepare water vapor and smoke-permeable multi-layer synthetic food casings which preferably have a non-uniform poly(vinyl alcohol) (PVOH) distribution across the layers with a maximum content in the middle layer. Preferably, the layer in contact with the food contains poly(vinyl alcohol) with a degree of hydrolysis of 98% to 100% and at least one semi-aromatic copolyamide.

It is typically not possible to achieve a high permeability level in a single-layer film, since the introduction of water-soluble polymers, like poly(vinyl alcohol) requires amounts above 27 wt%. When blowing up a tubular film of this composition in order to obtain a biaxially oriented film, the film becomes unstable and shows an increased amount of breaks, bursts and thus waste production.

Thus, the task underlying the present invention was to develop an industrial method for the modification and plastification of poly(vinyl alcohol) in a single step, taking into account the subsequent use of the poly(vinyl alcohol) in a mixture with granular polymeric materials for extrusion and production of polymer films, including sausage casings.

The process according to the present invention allows for the production of plasticized poly(vinyl alcohol) in the form of powders (agglomerates) or granules with a total input of (liquid) plasticizers of up to 21 to 25 wt% in one stage while providing a powder with stable rheological properties. These stable rheological properties ensure the stable feeding of the powder (agglomerate) or granules into an extruder, typically with the help of a continuous weight loss control device, together with other granular materials, like polyamides.

The modified poly(vinyl alcohol) shall lead to polyamide casings which have a high permeability for smoke and water vapor, have a high strength and give the sausage product a classic organoleptic appearance and performance.

There are certain methods of modification for poly(vinyl alcohol) which ensure a decrease in the melting point of crystallites to a value below the decomposition temperature. These methods include the increasing of the proportion of residual acetyl groups, typically by use of partially saponified types of poly(vinyl alcohol), the addition of water, even in minimum quantities, and the addition of plasticizers, like glycerol or other complex alcohols.

Typically, a higher amount of residual acetyl groups promotes a better absorption of the plasticizer.

Additives for the poly(vinyl alcohol)/plasticizer combinations are divided into components that affect the process technology and components used to achieve a certain property in the final product. Most preferably, a simultaneous positive effect of the additive on the plastification and extrusion process should be observed with a good property profile of the obtained film.

Since water is also a plastifier for poly(vinyl alcohol), often hydroxilic products which have a water absorption capacity are combined with the poly(vinyl alcohol), for example highly disperse silicic acids, monoglycerides, glycerol esters of stearic and palmitic acids.

Due to the volatility of water and the processing condition of plasticized poly(vinyl alcohol) in the film formation, the application of water underlies strict limitations. On the other hand, the presence of water can stimulate the penetration of other plasticizers into poly(vinyl alcohol) particles and thus contributes to their uniform distribution in the particles. Additionally, the presence of water in the plasticizer mixture counteracts the cleavage of water in the polymer and in the plasticizer themselves under autoclave extrusion conditions.

Typically, poly(vinyl alcohol) has an initial water content of from 1 to 5 wt% at a pressure of 1 bar and a temperature of 293.15 K. The term "initial water content" means the water content before performing the process step according to the present invention.

As defined throughout the specification and claims, a number of e.g. 5 wt% means 5.0 wt%. A value of 0.05 for example means a value of 0.050 with this accuracy.

According to the present invention, it was found that the addition of water in the form of a liquid or aerosol leads to a significant heterogeneity of the mixture with poly(vinyl alcohol) and plasticizers and to the formation of lumps (big agglomerates of a diameter of more than 4 mm). When liquid or aerosol water is introduced in a stirred tank reactor in the upper part of the reactor, this often leads to the fact that the upper layers of the poly(vinyl alcohol) are saturated with water and then it becomes very difficult to distribute the water throughout the poly(vinyl alcohol) by mixing or stirring.

According to the present invention, water, in addition to the initial water content, is introduced in the poly(vinyl alcohol) by flowing air having a humidity of 5 to 18 g/Nm³ through the stirred tank reactor by employing a pressure gradient throughout the stirred tank reactor. Furthermore, water is introduced by employing specific amounts of metal salt hydrates.

A specific volume of 2 to 9 Nm³ of air is employed per 1 kg of the mixture. The term "Nm³" means norm(al) cubic meters as defined in ISO 6358/ISO 8778 and DIN 1945 in their edition valid in 2018. Typically, the norm(al) cubic meter is measured based on a pressure of 1.0 bar and a temperature of 293.15 K.

A stirred tank reactor according to the present invention is a closed reactor which is equipped with a stirrer capable of mixing the contents contained in the tank reactor. Often, the stirred tank reactor has a vertical elongation with a rotating stirrer axis in the center of the stirred tank reactor. The stirrer blades can allow for radial and/or in-axis transport and mixing of the stirred tank ingredients.

The air is introduced at or near the bottom of the stirred tank reactor and vented at or near the top of the stirred tank reactor. The term "at or near the bottom" means that e.g. for a cylindrical reactor, the air is introduced at the bottom or a region up to 15% of the (vertical) length of the reactor. Similarly, the term "at or near the top" of the stirred tank reactor means a position at the top of the reactor or a region up to 15% lower in the vertical direction of the reactor. Most preferably, air is introduced at the bottom of the stirred tank reactor and vented at the top of the stirred tank reactor, so that the air passes through the whole tank reactor volume in a vertical direction from the bottom to the top.

In order to facilitate the airflow through the reactor, the pressure at or near the top of the stirred tank reactor is at least 0.1 bar lower, preferably at least 0,3 bar lower than the pressure at or near the bottom of the stirred tank reactor. By employing this pressure gradient, an airflow from the bottom to the top of the stirred tank reactor is ensured. Preferably, there is a gradient of 10% at the bottom of the reactor and at least 65% at the top of the reactor.

Preferably, the pressure difference between bottom and top of the stirred tank reactor is at least 0.3 bar, more preferably at least 0.5 bar, most preferably at least 0.6 bar.

Preferably, at or near the top of the stirred tank reactor, there is an internal absolute pressure of 0.2 to 0.5 bar, more preferably 0.25 to 0.45 bar, specifically 0.27 to 0.43 bar.

Furthermore, it is preferred that during the initial stage of the process, the pressure in the reactor is increased to at least 2 bar at the top and bottom of the reactor.

By employing 2 to 9 Nm³, preferably 4 to 7 Nm³ of air per 1 kg of the mixture, and the air having a humidity of 5 to 18 g/Nm³, preferably 8 to 15 g/Nm³, specifically 9 to 14 g/Nm³, a sufficient amount of water can be introduced in the poly(vinyl alcohol) having an initial water content of from 1 to 5 wt%, preferably 2 to 3 wt%, based on the sum of poly(vinyl alcohol) and water, in combination with 0.05 to 3.0 wt%, preferably 0.07 to 2.5 wt%, specifically 0.1 to 1.9 wt%, based on the amount of component A, of at least one granular or powdered metal salt hydrate having a melting point in the range of from 25 to 125°C, the amount being based on the anhydrous salt.

According to the present invention, a poly(vinyl alcohol)-containing mixture is treated with the air under stirring conditions while applying the pressure gradient.

The mixture comprises
- a solid state granular or powdered poly(vinyl alcohol) having a degree of hydrolysis of from 70 to 100 mol%, and having a number average molecular weight of from 20,000 to 100,000 g/mol, and having an initial water content of from 1 to 5 wt%, based on the sum of the poly(vinyl alcohol) and water, as component A;
- 0.05 to 3.0 wt%, based on the amount of the component A, of at least one granular or powered metal salt hydrate having a melting point in the range of from 25 to 125°C, the amount being based on the anhydrous salt, as component B, preferably 0.07 to 2.5 wt%, more preferably 0.1 to 1.9 wt%;
- 0 to 37 wt%, based on the amount of component A, of at least one plasticizer different from water, as component C, preferably 5 to 35 wt%, more preferably 7 to 30 wt%, specifically 10 to 25 wt%;
- 0 to 13 wt%, based on the amount of the component A, of at least one mineral anti-blocking additive, as component D, preferably 0.5 to 10 wt%, more preferably 1.0 to 7.5 wt%, specifically 1.5 to 5 wt%.

As component A, a solid state granular or powdered poly(vinyl alcohol) is employed. The preferred poly(vinyl alcohol) has an average particle size in the range of from 0.1 to 3.0 mm, more preferably 0.5 to 2.5 mm, referring to an arithmetical or number particle size which can be determined by sieving the poly(vinyl alcohol) or by optical means (camsizer). Typical poly(vinyl alcohol) grades are BC and BP of Chang Chun Petrol Chemical Co. or Gohsenol of the N-type or H-type, produced by Nippon Gohsey (UK) Ltd.

The poly(vinyl alcohol) has a degree of hydrolysis of from 70 to 100 mol%, preferably from 72 to 98 mol%. The degree of hydrolysis refers to the amount of free hydroxyl groups, the remainder of the hydroxyl groups being typically capped by esterification, e.g. by acetyl groups. The poly(vinyl alcohol) has a number average molecular weight of from 20,000 to 100,000 g/mol, preferably from 20000 to 40000 g/mol. The number average molecular weight can be measured by GPC methods, using polystyrene as a standard.

As component B, a granular or powdered metal salt hydrate having a melting point in the range of from 25 to 125°C is employed. Most suitable are metal salt hydrates having a melting point in the range of from 30 to 125°C, since this temperature range is the optimum for the plastification of poly(vinyl alcohol). The granular or powdered salt hydrates can be distributed in the poly(vinyl alcohol) in a mixer or stirred tank reactor. The preferred hydrates of metal salts are listed in Table 1 below.

**Table 1**

| hydrates of salts | melting temperature, °C | thermal decomposition, °C |
|---|---|---|
| Na₂SO₄ · 10H₂O | 32.4 | |
| Na₂CO₃ · 10H₂O | 32.5 | |
| Na₂CO₃ · 7H₂O | 35 | |
| Na(CH₃COO)₂ · 3H₂O | 58 | 120 |
| Mg(CH₃COO)₂ · 4H₂O | 80 | 135 |
| Na₂CO₃ · H₂O | 100 | |

The first entry is also known as Glauber's salt.

Preferably, a mixture of magnesium acetate tetrahydrate and Glauber's salt is employed, most preferably in an amount of from 0.1 to 1.9 wt%, based on the anhydrous salt and component A. In this mixture, the content of Glauber's salt is preferably in the range of from 0.1 to 99.9 wt%, more preferably from 0,1 to 10 wt%, most preferably 1 to 5 wt%. Specifically this mixture allows for a uniform and gradual release of water into the poly(vinyl alcohol) as it warms up from 30 to 125°C, preferably 32.4 to 80°C. The use of sodium and magnesium salts is also preferred because they are catalysts for the chemical modification of poly(vinyl alcohol), improving the compatibility of poly(vinyl alcohol) with polyamides.

Higher amounts of metal salt hydrates are not preferred because large salt contents impair the stability of the melt during extrusion. At the same time, if too much water comes from the salt hydrate in the poly(vinyl alcohol), a premature plastification of poly(vinyl alcohol) in the reactor may occur, and the mixture can turn into a jelly-like mass.

Therefore, according to the present invention, additionally, humid air is passed through the poly(vinyl alcohol) at a temperature in the range of from 80 to 130°C, preferably 82 to 120°C, more preferably 95 to 105°C. It was found that the flow of the air is possible by creating a pressure gradient in the stirred tank reactor, the difference between the pressure in the upper and lower part of the reactor being not less than 0.6 bar. Preferably, when a vacuum is created under the reactor cover of 70%, at the bottom of the reactor, at the agitator or stirrer level, the vacuum is not more than 10%. Due to the pressure gradient, the (atmospheric) air moves throughout the reactor and the mixture of poly(vinyl alcohol).

For example, air can be sucked in through a special hole in the lower part of the hopper.

The stirred tank reactor can have every suitable size and form. Preferably, it has a vertically elongated form with a (radial) mixer or stirrer. For example, a mixer type SRL-Z 200/500, plastic heat/cool vertical mixing unit of Zhangjiagang Gerui, China, having an effective capacity of 150 or 320 liters, a stirring speed of 100 to 1000 rpm depending on motor power, equipped with a pump or a vacuum pump can be employed as a reactor.

Preferably, flow splitters are introduced into the lid of the stirred tank reactor, and the process is carried out with a pressure gradient of preferably at least 1 bar and a maximum pressure of up to 2 bar in the top part of the reactor, at least in the initial stage. Furthermore, the rotation speed of the mixture blades can be varied in order to stabilize the flow properties of the powder or granules. By this, a dividing of the mixture in a more dense, slowly moving upper part and in less dense lower part can be prevented.

The modification reaction is preferably performed for a time of 1 to 10 hours, more preferably 2 to 5 hours. Preferably, the air introduced into the mixture has a temperature in the range of from 15 to 35°C, more preferably 18 to 28°C.

For dosing the air, a pump is typically used which is typically capable of pumping not more than 100 m³ per hour per bar.

A combination of humid air with component B allows for a plastification of the poly(vinyl alcohol). In a preferred embodiment, the mixture additionally contains a plastifier different from water as component C. The plastifier is preferably selected from the group comprising glycerol, 1.2-propylene glycol, pentaerythritol, trimethylolpropane, sorbitol, xylitol, inositol, mannitol, triethanolamine, polyethylene glycol having a molecular weight of from 100 to 500, preferably 200 to 400, ethylene glycol, butanediols, hexane triols, neopentyl glycol, water-soluble oxyethylated organic compounds, and mixtures thereof. Suitable plastifiers are disclosed in EP 0 332 318 B1, EP 1 594 914 B1 and WO 2012/134347. Typically, in order to introduce 12 wt% of component C, 3 hours are required, whereas to introduce 21 wt%, 4 hours are needed.

The component C is preferably a liquid organic plasticizer, more preferably a liquid high-viscosity organic plasticizer.

Particularly preferred is a mixture of water with glycerol and trimethylolpropane, or a mixture of water, triethylamine, polyethylene glycol and glycerol.

According to the invention, it was found that solely creating a vacuum in a sealed reactor, without the movement of air and the possibility of removal of volatile substances from the mixture, a contamination of the surface of the reactor and a deposition of substances on the inner walls of the reactor take place, and a poor quality plastification of poly(vinyl alcohol) results, partly due to the cross-linking of the macromolecules.

Additionally, at least one mineral anti-blocking additive may be employed as component D. Preferred anti-blocking or anti-caking additives are chalk, talc, silicon, silicate or mixtures thereof.

The sequence of mixing the components of the mixture for a given temperature regime can be as follows:
Poly(vinyl alcohol) - liquid plastifier with lower viscosity - liquid plastifier with higher viscosity - mineral additive - external lubricant - mineral additive.

A typical cross section of the modified poly(vinyl alcohol) particles shows in the center the less viscous plasticizer, then the viscous plasticizer, then the shell: a surface consisting of mineral particles and external lubrication.

In order to estimate the stability of the flow of the mixture, the stability of the percentage ratios of granules and agglomerates of the modified poly(vinyl alcohol) can be measured by sampling from the bottom of the extruder hopper. For each of four variants of the formulations, three samples were taken and the granules were separated from agglomerate in water, dried afterwards and weighed. Thus the percentage composition of poly(vinyl alcohol) in the sample was determined. The quality of the mixture was evaluated using a minimum index I by the formula I = 1-S/S₀, wherein S means the standard deviation of the respective component in the sample in %, S₀ means the deviation of the component for a non-intermixed system, S₀ = (C(1-C))^{1/2} x 100, and C is the concentration of the compound in the sample.

The following Table 2 gives more examples of compositions with the resulting mixing index I.

**Table 2**

| Example | 1 | 2 | 3 | 4 |
|---|---|---|---|---|
| 1. PVOH Type BC-05 | 1000 | 1000 | 1000 | 1000 |
| 2. Glycerol | 120 | - | - | 120 |
| 3. PEG 300¹ | - | 60 | 80 | 60 |
| 4. TMP² | - | 80 | - | - |
| 5. TEA³ | 80 | - | 100 | - |
| 6. External lubricant | - | 30 | 20 | - |
| 7. Talc | 10 | - | 10 | - |
| 8. Chalk | - | - | 5 | 10 |
| 9. Silicon silicate | 5 | - | - | 10 |
| Dosing plastified PVOH in extruder, % | 30 | 30 | 30 | 30 |
| S, standard deviation of the PVOH in the sample, % | 6.3 | 7.1 | 3.4 | 4.9 |
| I, mixing index | 0.86 | 0.85 | 0.93 | 0.91 |

| | | | | |
|---|---|---|---|---|
| ¹ Polyethylene glycol having a number average molecular weight of 300 ² Trimethylolpropane ³ Triethylamine | | | | |

The mixing in the process is performed at a temperature in the range of from 80 to 130°C, more preferably 82 to 125°C. Preferably, the temperature is oscillating between a lower value in the range of from 90 to 95°C and a higher value in the range of from 105 to 125°C, the duration of one oscillation being preferably in the range of from 10 to 60 minutes. The mixing is typically performed for a time of 0.5 to 5 hours, preferably 1 to 3 hours. Preferably at least 3, more preferably at least 5 oscillations are performed in 1 to 3 hours, typically by varying the rotational speed of the knives of the reactor stirrer. When increasing the blade rotational speed, care should be taken so that local overheating of the poly(vinyl alcohol) should be prevented.

This procedure allows increasing the stability of the shell extrusion process, the absence of breaks during blowing and orientation for a time period of more than 12 hours (triple bubble process) and a reduction in the number of helices larger than 250 µm to not more than 2 per 10 running meters of the sausage casing.

The modified poly(vinyl alcohol) is preferably used to modify a polyamide, specifically a semi-aromatic polyamide. Therefore, the invention also relates to a water vapor- and smoke-permeable synthetic food casing comprising one or more layers, wherein at least one layer comprises a modified poly(vinyl alcohol) or to a vapor- and smoke-permeable synthetic food casing comprising one or more layers, wherein at least one layer comprises the modified poly(vinyl alcohol) and a polyamide.

Inhomogeneous structure over the casing thickness and/or nonuniform (uneven) PVOH plastificated distribution across the thickness of the casing can be achieved by encapsulation and/or rheological properties of the composition and/or multilayered casings and/or a specific extrusion die construction. Multilayer casings are preferable.

Preferred is a tubular film casing, which is permeable or semi-permeable to smoke and water-vapor, comprising at least one layer (1), which comprises a mixture of at least one semi-aromatic (co)polyamide with at least one water-soluble synthetic organic polymer and optionally at least one plastifier, at least one compatibilizer, at least one mineral additive or mixtures thereof, wherein at least one of the water-soluble synthetic organic polymers is a modified poly(vinyl alcohol) as defined above.

Preferably, the casing is biaxially oriented and thermosetting.

Preferably, in addition to the modified poly(vinyl alcohol) as defined above, at least one additional water-soluble, synthetic, organic polymer can be employed in the at least one layer (1), selected from the group comprising
(i) a partially or completely saponified poly(vinyl alcohol),
(ii) a copolymer having vinyl alcohol units,
(iii) a poly(alkylene glycol),
(iv) a copolymer having alkylene glycol units,
(v) a polyvinylpyrrolidone,
(vi) a copolymer having vinylpyrrolidone units and units of at least one α,β-olefinically unsaturated monomer,
(vii) a homopolymer or a copolymer having units of N-vinylalkylamides and/or
(viii) a (co)polymer of or polymer having units of α,β-unsaturated carboxylic acids or α,β-unsaturated carboxamides
or mixtures thereof.

A specifically preferred layer (1) comprises in addition to the modified poly(vinyl alcohol) as defined above a polyvinylpyrrolidone, wherein preferably the poly(vinyl alcohol) and the polyvinylpyrrolidone are employed in a weight ratio of from 0.1 to 10 : 1.

Preferred casings, specifically food casings, have one or more of the following features:
- the at least one layer (1) comprises a plastifier which is selected from one or more of glycerol, mono- and diglycol, trimethylolpropane, a mono-, di- or triester of glycerol with carboxylic acids, formamide, acetamide, N,N-dimethylformamide or N,N-dimethylacetamide;
- the semi-aromatic (co)polyamide comprises units derived from isophthalic acid and/or terephthalic acid;
- the tubular film has a thickness of from 15 to 70 µm and each layer of the film has a thickness of at least 2 µm;
- the casing has a water-vapor permeability of from 50 to 300 g/m²/day at 23°C and 85% relative humidity;
- the tubular film comprises 2 to 10 layers.

The food casing can comprise at least one second layer (2) which comprises a mixture of at least aliphatic (co)polyamide, preferably selected from one or more of PA 6, PA 6/66, PA 66, PA 6.8, PA 6.9, PA 6.11, PA 11 and PA 12, with at least one water-soluble synthetic organic polymer and no plastifier, wherein preferably the second layer (2) furthermore comprises a semi-aromatic (co)polyamide.

The tubular film (food) casing as defined above can be produced by (co)extruding the mixtures forming the at least one layer (1) and optionally further layers.

The invention also relates to a food product, comprising the tubular film (food) casing as defined above, filled with the solid or paste-like foodstuff, wherein the foodstuff is preferably selected from sausages, cheese and spreadable foodstuff. The tubular film casing - apart from the modified poly(vinyl alcohol) - can be as described in EP 2 796 047 A1. Furthermore, suitable tubular films are disclosed in WO 2017/039490, WO 2014/104946, WO 2012/134347, EP 1 594 914 B1, EP 0 332 318 B1 and EP 0 004 587 B1.

The semi-permeable food casing based on synthetic polymers achieves the following characteristics: water-vapor loss (weight loss during cooking or ripening/drying/storage), permeability to smoke at different temperature ranges (20°C to 72°C), haptic and visual appearance of natural fabrics, adjustable adhesion to meat and therefore custommade peelability, coloring without involving the food contact layer and economical production costs.

As discussed in EP 2 796 047 A1, the semi-aromatic (co)polyamide can be advantageously employed in a tubular film food casing. The semi-aromatic (co)polyamide, when combined with at least one water-soluble synthetic organic polymer, can provide for an advantageous semi-permeable property profile leading to a semi-permeability to smoke and water-vapor.

The tubular film food casing can be smoked at different temperatures, preferably in the range of from 20 to 72°C. Furthermore, the haptic and visual appearance resembles that of natural fabrics. The adhesion to meat and other foodstuff contained in the casing can be adjusted by adjusting the composition of the innermost layer of the tubular film food casing so that the peelability can be adjusted to the specific contained foodstuff.

By employing semi-aromatic polyamides in the tubular film food casing, a number of advantages can be achieved:
Excellent mechanical properties, versatility of available semi-aromatic polyamides to achieve required flexibility and thus twistability of thin films required in the meat industry and relatively low melting points of some semi-aromatic polyamides allowing forming blends of lower processing temperature profile to facilitate extrusion of heat-sensitive water-soluble polymers like poly(vinyl alcohol) (PVOH). This is the reason why layers with semi-aromatic polyamides can contain other polymers with low temperature processability. Possible additional layers with aliphatic polyamides can contain heat-resistant polymers such polyvinylpyrrolidone. The combination of those properties in a multi-layer structure, with a possible variation of layer thicknesses of such polymer blends, creates new properties needed for production of several cooked/smoked and semi-dry meat, cheese and other foodstuff products.

In order to achieve these properties, the usage of semi-aromatic polyamides, especially those with melting points ranging from 150°C to 212°C, is an important element of the solution. The combination of those semi-aromatic polyamide types allows not only extrusion at low temperatures needed to process poly(vinyl alcohol) but also allows for low film thicknesses with very satisfactory mechanical properties needed to suit many demands of the meat industry: stretchability, twistability (for linking processes), puncture resistance and curvability (friendly ringing process for naturally looking sausages resembling natural casing beef runners).

According to the present invention, semi-aromatic (co)polyamides are employed in the at least one layer (1) of the tubular film food casing. The term "(co)polyamides" encompasses polyamides and copolyamides. Semi-aromatic (co)polyamides contain aromatic units in the polymer chain. In a polyamide formed of dicarboxylic acid and diamine units, the aromatic units can be present in the dicarboxylic acid and/or diamine units. Preferably, they are present in the dicarboxylic acid units. More preferably, the dicarboxylic acid units comprise isophthalic acid or terephthalic acid units. The term "semi-aromatic" defines that not all monomer building blocks of the polyamides are aromatic. Therefore, besides aromatic dicarboxylic acids or diamines aliphatic dicarboxylic acids or diamines can be employed. Therefore, the polyamide has units or building blocks derived from aromatic compounds and non-aromatic compounds.

If only one type of dicarboxylic acid and diamine is employed in the production of the polyamide, it is a polyamide. If comonomers are employed, e.g. different types of dicarboxylic acids and/or diamines, a copolyamide results.

The copolyamides can also contain units derived from lactams, like caprolactams, or from aminocarboxylic acids.

The amount of aromatic monomeric units (dicarboxylic acids or diamines) contained in the (co)polyamide, based on the total amount of dicarboxylic acids or diamines, is preferably 1 to 100 wt%, more preferably 5 to 50 wt%.

Suitable semi-aromatic (co)polyamides can be obtained from different sources. Examples are ISO 1874-PA 6/IPDI, FS 18-020 (Durethan® C 38 FA of Lanxess), ISO 1874: PA 6/PA 61, FT, 14-030 (Durethan® CI 31, F of Lanxess), copolyamides BM 16 and BM 17 of EMS-Chemie.

Semi-aromatic (co)polyamides which are advantageously employed according to the present invention have a melting point in the range of from 150 to 212°C, preferably 160 to 195°C.

According to a preferred embodiment, this at least one layer (1) does not comprise aliphatic (co)polyamides.

The at least one layer (1) comprises a mixture of at least one of these semi-aromatic (co)polyamides with at least one water-soluble synthetic organic polymer and optionally at least one plastifier.

The amount of semi-aromatic (co)polyamide based on the at least one layer (1) is preferably in the range of from 3 to 97 wt%, more preferably 47 to 73 wt%, in particular 50 to 60 wt%.

The amount of the at least one water-soluble synthetic organic polymer is preferably in the range of from 1 to 65 wt%, more preferably in the range of from 15 to 50 wt%, in particular in the range of from 27 to 49 wt%.

The amount of the at least two plastifiers is preferably in the range of from 1 to 30 wt%, more preferably in the range of from 0 to 20 wt%.

The amounts of all ingredients of the at least one layer (1) add up to 100 wt%. If only semi-aromatic (co)polyamides, water-soluble synthetic organic polymers (and optionally plastifiers) are present, the sum of their amounts adds up to 100 wt%.

The water-soluble, heat-plasticizable, synthetic, organic polymer in addition to the modifier PVOH is preferably
a) a poly(vinyl alcohol) (PVOH), as obtainable by partial or complete saponification of poly(vinyl acetate) (PVAC), or a copolymer having vinyl alcohol units (for example a copolymer having units of vinyl alcohol and propen-1-ol),
b) a poly(alkylene glycol), in particular poly(ethylene glycol), poly(propylene glycol) or a corresponding copolymer having alkylene glycol units, in particular ethylene glycol and/or propylene glycol units, and units of other monomers,
c) a polyvinylpyrrolidone or a water-soluble copolymer having vinylpyrrolidone units and units of at least one [alpha],[beta]-olefinically unsaturated monomer,
d) a polymer of N-vinylalkylamides, e.g. poly(N-vinylformamide), poly(N-vinylacetamide) or
e) a (co-)polymer of or comprising units of α,β-unsaturated carboxylic acids or α,β-unsaturated carboxamides, in particular with units of (meth)acrylic acid and/or (meth)acrylamide.

Of these groups, a) is particularly preferred. Very particular preference is given to a PVOH having a mean molecular weight MW of 10,000 to 50,000 and a degree of saponification of the acetate groups in the range 75 to 98%.

Preferably, the at least one layer (1) preferably comprises at least two different water-soluble synthetic organic polymers.

More preferably, the at least one layer (1) comprises a partially or completely saponified poly(vinyl alcohol) and a polyvinylpyrrolidone. The poly(vinyl alcohol) and the polyvinyl pyrrolidone are preferably employed in a weight ratio in the range from 0.1 to 10 : 1, more preferably 0.2 to 5 : 1, in particular 0.3 to 3 : 1.

The combination of these two water-soluble synthetic organic polymers leads to specific advantageous properties with regard to vapor and smoke permeability.

Preferably, at least one plastifier is employed in the composition of the at least one layer (1). Preferably, the plastifier is selected from one or more of glycerol, mono- and diglycol, trimethylolpropane, a mono-, di- or triester of glycerol with carboxylic acids, formamide, acetamide, N,N-dimethylformamide or N,N-dimethylacetamide.

The food casing according to the present invention can contain one or more layers (1) of the same or different compositions.

Furthermore, a preferred food casing according to the present invention furthermore comprises at least one second layer (2), comprising a mixture of at least one aliphatic (co)polyamide with at least one water-soluble synthetic organic polymer and no plastifier.

Preferably, the aliphatic (co)polyamide is selected from one or more of PA 6, PA 6/66, PA 66, PA 6.8, PA 6.9, PA 6.11, PA 11 and PA 12.

Of the aliphatic (co)polyamides, preference is given to poly(ε-caprolactam), also termed "nylon 6", the polyamide of hexamethylenediamine and adipic acid (= poly(hexamethylene adipamide) or nylon 66), the copolyamide of ε-caprolactam and 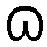 -laurolactam (= nylon 6/12) and also nylon 6/66. The copolyamides also include heterofunctional polyamides, in particular polyetheramides, polyesteramides, polyetheresteramides and polyamide urethanes. Among these polymers, preference is given to those having block-type distribution of the various functionalities, i.e. block copolymers. Particularly preferred block copolymers are poly(ether block amides).

The second layer (2) can be free from semi-aromatic (co)polyamides. However, it is also possible that the second layer furthermore comprises a semi-aromatic (co)polyamide.

For the type of semi-aromatic (co)polyamide, reference can be made to the above-mentioned semi-aromatic (co)polyamides.

For the water-soluble synthetic organic polymer, reference can be made to the above-mentioned polymers. In a preferred embodiment, the second layer (2) contains only polyvinylpyrrolidone as water-soluble synthetic organic polymer.

The second layer (2) preferably contains no plastifier.

The proportion of aliphatic (co-)polyamide is generally 40 to 94 wt%, preferably 55 to 90 wt%, particularly preferably 60 to 85 wt%, in each case based on the total weight of the mixture forming layer (2).

The content of the synthetic water-soluble polymer is generally 3 to 50 wt%, preferably 10 to 40 wt%, particularly preferably 15 to 30 wt%, based on the total weight of the thermoplastic mixture forming layer (2).

The sum of the ingredients of the second layer (2) adds up to 100 wt%.

The food casings according to the present invention can contain one or more second layers (2) of same or different composition.

The layers of the food casing according to the present invention can contain additives and further ingredients.

If appropriate, the thermoplastic mixture comprises additives which affect the properties of the casing. By this means, properties, such as optics, haptics, moisture storage capacity or peeling behavior, can be set exactly as desired or as required. For this, in particular polysaccharides, inorganic fillers and color pigments can be considered.

Preferred organic additives are polysaccharides. These include starch (native or destructured, in the latter case having plasticizer additives such as glycerol), cellulose (in the form of powders or short fibers, the short fibers being able to be fibers of native origin or fibers produced by viscose spinning), exo-polysaccharides (such as carrageenan, locust bean gum or guar gum) and polysaccharide derivatives (such as crosslinked starch, starch esters, cellulose esters, cellulose ethers or carboxyalkylcellulose ethers).

The inorganic fillers which come into consideration are, in particular, quartz powder, titanium dioxide, calcium carbonate, talcum, mica and other aluminosilicates, glass stable fibers, other mineral fibers or microglass beads. Depending on the desired color, color pigments can be of organic and/or inorganic nature.

Other components which are expediently present are, for example, the aforementioned plasticizer aids, such as glycerol, mono- and diglycols, trimethylolpropane, mono-, di- and triesters of glycerol with carboxylic acids (especially linear (C₃-C₁₂)-alkanoic acids), formamide, acetamide, N,N-dimethylformamide, N,N-dimethylacetamide, also stabilizers and processing aids.

The content of other substances present if appropriate is generally 0 to 25% by weight, preferably 1 to 20% by weight, particularly preferably 2 to 8% by weight, based on the total weight of the thermoplastic mixture or respective layer. Polysaccharides should be present here in a content of a maximum 5% by weight, in order to keep the water vapor transmission rate within said limits. If amounts of plastifier are individually stated, they are not included in the ranges given here. The invention also relates to a method for producing the inventive food casing. The production is generally performed by extrusion processes which are known per se to those skilled in the art.

After the mixture forming a layer of the tubular film has melted in the extruder, it is homogenized and jointly plasticized. The melt is then extruded through a ring die. A primary tube forms having a relatively high wall thickness. The primary tube is then rapidly cooled to freeze the amorphous state of the polymers. Then it is reheated to the temperature necessary for stretching, for example to about 80°C. The tube is then stretched in longitudinal and transverse directions, which is preferably carried out in one operation. The longitudinal stretching is customarily performed using two nip-roller pairs having increasing drive speed; the transverse stretching is performed by a gas pressure operating on the walls of the tube from the inside. The area stretching ratio (that is the product of longitudinal and transverse stretching ratio) is generally about 6 to 18, preferably about 8 to 11.

After stretching, the tube is preferably further heat-set. This permits the desired shrink properties to be set exactly. Finally, the tube is cooled, laid flat and wound up.

In a particular embodiment, the tube is then made into a ring. For this the tube is inflated, heated on one side (generally without contact by radiant heat) and then bent in the heated state, so that it takes on a ring-shaped or spiral-shaped form. Methods and apparatuses for ring-shaping are generally known to those skilled in the art and also described in the patent literature.

Preferably, the tubular film has a thickness of from 15 to 70 µm, more preferably of from 20 to 60 µm, in particular of from 25 to 45 µm.

Each layer of the film has a preferably a thickness of at least 2 µm, more preferably at least 5 µm, in particular at least 8 µm.

Preferably, the food casing has a water-vapor permeability of from 50 to 300 g/m²/day at 23°C and 85% relative humidity. Under these conditions, the water-vapor permeability is more preferably in the range of from 90 to 250 g/m²/day, in particular in the range of from 145 to 170 g/m²/day.

Preferably, the tubular film according to the present invention comprises 2 to 10 layers, more preferably 3 to 7 layers. The number and sequence of the layers can be chosen according to the actual demands of the specific foodstuff contained in the food casing.

Preferably, the food casing is biaxially oriented and thermosetting.

The combination of such layers with preferred polymers may be schematically represented as layers (1) to (3) in EP 2 796 047.

List of some commercially available polymers used in co-extrusion of a multilayer tubular film (casing) for described layers (1), (2) and (3):
- Semi-aromatic polyamides:
   - ISO 1874-PA 6/IPDI, FS, 18-030N (Durethan C38FKS, Lanxess)
   - ISO 1874-PA 6/IPDI ,FS, 18-020 (Durethan C38FA, Lanxess)
   - ISO 1874: PA6/PA 6I, FNT, 14-020 (Durethan CI31F, Lanxess)
   - BM 16 (EMS-Chemie)
   - BM 17 (EMS-Chemie)
- Aliphatic polyamides:
   - PA 6 (B33 of BASF),
   - PA 666 (C33 of BASF)
   - PA 666 (C40 of BASF)
- Water-soluble components:
   - Poly(vinyl alcohol) (PVOH): PVA BC05, PVA BP05, PVA BF-05, PVOH NK-05, PVOH NL-05, Mowiol 6-88, Mowiol 8-88.
   - Polyvinylpyrrolidone (PVP), Polyplasdone XL 10, ISP
- Compatibilizator:
   - Joncril (BASF), Fusabond (Du Pont)
- Catalyst-plastifier:
   - hydrates of salts, water-soluble salt
- Plastifier:
   - glycerol, trimethylolpropane, triethanolamine, polyethylene glycols
- Additives, and other processing aids:
   - Talc, Chalk, Silicon silicate.

Examples of casings according to this invention are shown in Tables 3 and 4.

Preliminary plastification of PVOH was carried out at a temperature of 95 to 125°C, depending on the degree of hydrolysis of PVOH and the viscosity of plasticizers. For all examples we obtained fine-grained, easily flowing, crumbly powder-agglomerates of plasticized PVOH. The sausage casing was made by co-extrusion with blowing according to the triple bubble method. The results show that the use of fully hydrolyzed PVOH grades in combination with semi-aromatic polyamides and low viscosity plasticizers, with the optimal content and kind of compatibilizers and catalysts and mineral fillers, can significantly increase the strength of the casing, while increasing their permeability. While the permissible level of overall migration and low adhesion to the sausage product are observed.

**Table 3**

| Exam ple | thickness [µm] | polyamide | wt% | PVOH or water-soluble polymer | wt% | degree of hydrolysis | viscosity | plasticizer | wt% | viscosity (Pas) | mineral additive | wt% | catalyst | wt% |
|---|---|---|---|---|---|---|---|---|---|---|---|---|---|---|
| 1 | 5 | Duretan® C38FKS | 58.7 | type 2 | 35.2 | 90.3 | 6 | type N1 | 4.8 | 0.1 | type N2 | 0.3 | type N2 | 1 |
| | 10 | Ultramid® C33 | 41.1 | type 1 | 45.03 | 72.4 | 5 | type N2 | 11.97 | 0.9 | type N1 | 0.4 | type N1 | 1.5 |
| | 10 | Ultramid® C33 | 41.1 | type 1 | 45.03 | 72.4 | 5 | type N2 | 11.97 | 0.9 | type N1 | 0.4 | type N1 | 1.5 |
| | 5 | Duretan® C38FKS | 68.7 | type 3 | 26.4 | 90.3 | 8 | type N1 | 3.6 | 0.1 | type N2 | 0.3 | type N2 | 1 |
| | | the average weighted value | **48.6** | | **40.3** | **78.4** | **5.7** | | **9.4** | **0.6** | | **0.4** | | **1.3** |
| 2 | 5 | Durethan® CI 31F | 63.8 | type 3 | 33.25 | 90 | 8 | type N2 | 1.75 | 0.9 | type N2 | 0.2 | type N2 | 1 |
| | 10 | Ultramid® B33 | 38.1 | type 1 | 51 | 73.1 | 5 | type N3 | 9 | 1.4 | type N1 | 0.4 | type N1 | 1,5 |
| | 10 | Ultramid® C33 | 38.1 | type 1 | 51 | 73,1 | 5 | type N3 | 9 | 1,4 | type N1 | 0,4 | type N1 | 1,5 |
| | 5 | Durethan® CI 31F | 68.8 | type 4 | 28.5 | 99.6 | 5 | type N2 | 1.5 | 0.9 | type N2 | 0.2 | type N2 | 1 |
| | | the average weighted value | **51.8** | | **41.3** | **83.2** | **6.0** | | **5.3** | **1.2** | | **0.3** | | **1.3** |
| 3 | 5 | Duretan® C38FA | 63 | type 1 | 29.75 | 73.1 | 5 | type N1 | 5.25 | 0.1 | type N2 | 0.5 | type N2 | 1.5 |
| | 10 | Duretan® C38FA | 37.6 | type 1 | 45 | 72.4 | 5 | type N2 | 15 | 0.9 | type N1 | 0.4 | type N1 | 2 |
| | 10 | Ultramid® B33 | 37.6 | type 1 | 45 | 72.4 | 5 | type N2 | 15 | 0.9 | type N1 | 0.4 | type N1 | 2 |
| | 5 | Duretan® C38FA | 68 | type 4 | 25.5 | 99.6 | 5 | type N1 | 4.5 | 0.1 | type N2 | 0.5 | type N2 | 1.5 |
| | | the average weighted value | **46.9** | | **39.2** | **77.1** | **5.0** | | **11.6** | **0.6** | | **0.5** | | **1.8** |

The following components were used:
PVOH or water-soluble polymer type N1: Super low hydrolyzed grade PVOH PVOH or water-soluble polymer type N2: Partially hydrolyzed grade PVOH PVOH or water-soluble polymer type N3: Partially hydrolyzed grade PVOH PVOH or water-soluble polymer type N4: Fully hydrolyzed grade PVOH
Plastifier type N1: PEG
Plastifier type N2: TEA
Mineral additive type N1: chalk
Mineral additive type N2: talc
Catalyst type N1: mixture of magnesium acetate tetrahydrate and Glauber's salt.
Catalyst type N2: magnesium acetate tetrahydrate

The mechanical properties for films formed of different compositions are listed in Table 4.

**Table 4**

| Example | stress at break, MPa | | elongation at break, % | | shrinkage, % | | permeability to water vapor at 23°C and 45% humidity | adhesion to meat, H/10 mm |
|---|---|---|---|---|---|---|---|---|
| | along | across | along | across | along | across | | |
| 1 | 150 | 183 | 62 | 64 | 13 | 15 | 651 | 0.11 |
| 2 | 155 | 207 | 70 | 54 | 12 | 14 | 588 | 0.20 |
| 3 | 179 | 220 | 78 | 61 | 15 | 14 | 750 | 0.07 |

The film thickness was from 27 to 33 micron.

The water-vapor permeations were obtained according to ISO 15106 2007 in g/m²/24 h. The mechanical values were measured according to ISO 527-3, in the edition valid in 2018.

## Claims

1. A modified poly(vinyl alcohol), **characterized in that** it is obtained by a process comprising the step of treating a mixture, comprising
- a solid state granular or po3wdered poly(vinyl alcohol) having a degree of hydrolysis of from 70 to 100 mol%, and having a number average molecular weight of from 20,000 to 100,000 g/mol, and having an initial water content of from 1 to 5 wt%, based on the sum of the poly(vinyl alcohol) and water, as component A,
- 0.05 to 3.0 wt%, based on the amount of the component A, of at least one granular or powered metal salt hydrate having a melting point in the range of from 25 to 125°C, the amount being based on the anhydrous salt, as component B,
- 0 to 37 wt%, based on the amount of component A, of at least one plasticizer different from water, as component C,
- 0 to 13 wt%, based on the amount of the component A, of at least one mineral anti-blocking additive, as component D,
at a temperature in the range of from 80 to 130°C in a stirred tank reactor with 2 to 9 Nm³ of air per 1 kg of the mixture, the air having a humidity of 5 to 18 g/Nm³,
wherein the air is introduced at or near the bottom of the stirred tank reactor and vented at or near the top of the stirred tank reactor,
and wherein a pressure gradient is maintained inside the stirred tank reactor, the pressure at or near the top of the stirred tank reactor being at least 0.1 bar lower than the pressure at or near the bottom of the stirred tank reactor.

2. A poly(vinyl alcohol) according to claim 1, wherein the temperature is in the range of from 82 to 125°C and is preferably oscillating between a lower value in the range of from 90 to 95°C and a higher value in the range of from 105 to 125°C, the duration of one oscillation being preferably in the range of from 10 to 60 minutes.

3. The poly(vinyl alcohol) according to claim 1 or 2, wherein the amount of component C is in the range of from 5 to 35 wt%, preferably 7 to 30 wt%, more preferably 10 to 25 wt%.

4. The poly(vinyl alcohol) according to one of claims 1 to 3, wherein the amount of component D is in the range of from 0.5 to 10 wt%, preferably 1.0 to 7.5 wt%, more preferably 1.5 to 5 wt%.

5. The poly(vinyl alcohol) according to one of claims 1 to 4, wherein the component D has a melting point in the range of from 30 to 125°C and is preferably selected from Na₂SO₄ · 10H₂O, Na₂CO₃ · H₂O, Na₂CO₃ · 7H₂O, Na₂CO₃ · 10H₂O, Na₂(CH₃COO)₂ · 3H₂O, Mg(CH₃COO)₂ · 4H₂O, and mixtures thereof.

6. The poly(vinyl alcohol) according to claim 5, wherein component B is a mixture of Mg(CH₃COO)₂ · 4H₂O and Na₂SO₄ · 10H₂O, preferably in a weight ratio of from 0.1 : 99.9 to 99.9 : 0.1.

7. The poly(vinyl alcohol) according to one of claims 1 to 6, wherein the amount of component B is from 0.07 to 2.5 wt%, preferably 0.1 to 1.9 wt%.

8. The poly(vinyl alcohol) according to one of claims 1 to 7, wherein component C is selected from the group comprising glycerol, 1.2-propylene glycol, pentaerythritol, trimethylolpropane, sorbitol, xylitol, inositol, mannitol, triethanolamine, polyethylene glycol having a molecular weight of from 100 to 500, preferably 200 to 400, ethylene glycol, butanediols, hexane triols, neopentyl glycol, water-soluble oxyethylated organic compounds, and mixtures thereof.

9. The poly(vinyl alcohol) according to one of claims 1 to 8, wherein component D is selected from the group comprising chalk, talc, silicon silicate and mixtures thereof.

10. The poly(vinyl alcohol) according to one of claims 1 to 9, wherein in the process, the absolute pressure at or near the top of the stirred tank reactor is in the range of from 0.2 to 0.5 bar, preferably 0.25 to 0.45 bar, specifically from 0.27 to 0.43 bar; differential pressure between bottom and top of the stirred tank reactor is preferably at least 0.3 bar, more preferably at least 0.5 bar, most preferably 0.6 bar.

11. A process for preparing a modified poly(vinyl alcohol) according to one of claims 1 to 10, wherein the process defined in one of claims 1 to 10 is performed.

12. The use of a modified poly(vinyl alcohol) according to one of claims 1 to 10 as an additive in water vapor- and smoke-permeable synthetic food casings.

13. A water vapor- and smoke-permeable synthetic food casing comprising one or more layers, wherein at least one layer comprises a modified poly(vinyl alcohol) according to one of claims 1 to 10 and a polyamide.

14. The casing according to claim 13, which is a tubular film casing, which is permeable or semi-permeable to smoke and water-vapor, comprising at least one layer (1), which comprises a mixture of at least one semi-aromatic (co)polyamide with at least one water-soluble synthetic organic polymer and optionally at least one plastifier, at least one compatibilizer, at least one mineral additive or mixtures thereof, wherein at least one of the water-soluble synthetic organic polymers is a modified poly(vinyl alcohol) as defined in one of claims 1 to 10.

15. The casing as claimed in claim 13 or 14, which is biaxially oriented and thermosetting.

16. The casing as claimed in claim 13 to 15, wherein the at least one layer (1) comprises in addition to the modified polyvinyl alcohol as defined in one of claims 1 to 10 at least one additional water-soluble, synthetic, organic polymer is employed, selected from the group comprising
(i) a partially or completely saponified poly(vinyl alcohol),
(ii) a copolymer having vinyl alcohol units,
(iii) a poly(alkylene glycol),
(iv) a copolymer having alkylene glycol units,
(v) a polyvinylpyrrolidone,
(vi) a copolymer having vinylpyrrolidone units and units of at least one α,β-olefinically unsaturated monomer,
(vii) a homopolymer or a copolymer having units of N-vinylalkylamides and/or
(viii) a (co)polymer of or polymer having units of α,β-unsaturated carboxylic acids or α,β-unsaturated carboxamides,
and mixtures thereof.

17. The casing as claimed in one of claims 14 to 16, wherein the at least one layer (1) comprises in addition to the modified poly(vinyl alcohol) as defined in one of claims 1 to 10 a polyvinylpyrrolidone, wherein preferably the poly(vinyl alcohol) and the polyvinylpyrrolidone are employed in a weight ratio of from 0.1 to 10 : 1.

18. The casing as claimed in one of claims 14 to 17, having one or more of the following features:
- the at least one layer (1) comprises a plastifier which is selected from one or more of glycerol, mono- and diglycol, trimethylolpropane, a mono-, di- or triester of glycerol with carboxylic acids, formamide, acetamide, N,N-dimethylformamide or N,N-dimethylacetamide;
- the semi-aromatic (co)polyamide comprises units derived from isophthalic acid and/or terephthalic acid;
- the tubular film has a thickness of from 15 to 70 µm and each layer of the film has a thickness of at least 2 µm;
- the casing has a water-vapor permeability of from 50 to 300 g/m²/day at 23°C and 85% relative humidity;
- the tubular film comprises 2 to 10 layers.

19. The casing as claimed in one of claims 14 to 18, which comprises at least one second layer (2) which comprises a mixture of at least one aliphatic (co)polyamide, preferably selected from one or more of PA 6, PA 6/66, PA 66, PA 6.8, PA 6.9, PA 6.11, PA 11 and PA 12, with at least one water-soluble synthetic organic polymer and no plastifier, wherein preferably the second layer (2) furthermore comprises a semi-aromatic (co)polyamide.

20. A food product, comprising a tubular film casing as defined in any one of claims 14 to 19, filled with a solid or paste-like foodstuff, wherein the foodstuff is preferably selected from sausages, cheese and spreadable foodstuff.

21. A food product, comprising a tubular film casing as defined in any one of claims 14 to 19, filled with a solid or paste-like foodstuff, wherein the foodstuff is preferably selected from sausages, cheese and spreadable foodstuff.

## Amended claims

### Amended claims in accordance with Rule 137(2) EPC.

1. A process for preparing a modified poly(vinyl alcohol) mixture, **characterized in that** it is obtained by a process comprising the step of treating a mixture, comprising
- a solid state granular or powdered poly(vinyl alcohol) having a degree of hydrolysis of from 70 to 100 mol%, and having a number average molecular weight of from 20,000 to 100,000 g/mol, and having an initial water content of from 1 to 5 wt%, based on the sum of the poly(vinyl alcohol) and water, as component A,
- 0.05 to 3.0 wt%, based on the amount of the component A, of at least one granular or powered metal salt hydrate having a melting point in the range of from 25 to 125°C, the amount being based on the anhydrous salt, as component B,
- 0 to 37 wt%, based on the amount of component A, of at least one plasticizer different from water, as component C,
- 0 to 13 wt%, based on the amount of the component A, of at least one mineral anti-blocking additive, as component D,
at a temperature in the range of from 80 to 130°C in a stirred tank reactor with 2 to 9 Nm³ of air per 1 kg of the mixture, the air having a humidity of 5 to 18 g/Nm³,
wherein the air is introduced at or near the bottom of the stirred tank reactor and vented at or near the top of the stirred tank reactor,
and wherein a pressure gradient is maintained inside the stirred tank reactor, the pressure at or near the top of the stirred tank reactor being at least 0.1 bar lower than the pressure at or near the bottom of the stirred tank reactor.

2. The process according to claim 1, wherein the temperature is in the range of from 82 to 125°C and is preferably oscillating between a lower value in the range of from 90 to 95°C and a higher value in the range of from 105 to 125°C, the duration of one oscillation being preferably in the range of from 10 to 60 minutes.

3. The process according to claim 1 or 2, wherein the amount of component C is in the range of from 5 to 35 wt%, preferably 7 to 30 wt%, more preferably 10 to 25 wt%.

4. The process according to one of claims 1 to 3, wherein the amount of component D is in the range of from 0.5 to 10 wt%, preferably 1.0 to 7.5 wt%, more preferably 1.5 to 5 wt%.

5. The process according to one of claims 1 to 4, wherein the component D has a melting point in the range of from 30 to 125°C and is preferably selected from Na₂SO₄ · 10H₂O, Na₂CO₃ · H₂O, Na₂CO₃ · 7H₂O, Na₂CO₃ · 10H₂O, Na₂(CH₃COO)₂ · 3H₂O, Mg(CH₃COO)₂ · 4H₂O, and mixtures thereof.

6. The process according to claim 5, wherein component B is a mixture of Mg(CH₃COO)₂ · 4H₂O and Na₂SO₄ · 10H₂O, preferably in a weight ratio of from 0.1 : 99.9 to 99.9 : 0.1.

7. The process according to one of claims 1 to 6, wherein the amount of component B is from 0.07 to 2.5 wt%, preferably 0.1 to 1.9 wt%.

8. The process according to one of claims 1 to 7, wherein component C is selected from the group comprising glycerol, 1.2-propylene glycol, pentaerythritol, trimethylolpropane, sorbitol, xylitol, inositol, mannitol, triethanolamine, polyethylene glycol having a molecular weight of from 100 to 500, preferably 200 to 400, ethylene glycol, butanediols, hexane triols, neopentyl glycol, water-soluble oxyethylated organic compounds, and mixtures thereof.

9. The process according to one of claims 1 to 8, wherein component D is selected from the group comprising chalk, talc, silicon silicate and mixtures thereof.

10. The process according to one of claims 1 to 9, wherein the absolute pressure at or near the top of the stirred tank reactor is in the range of from 0.2 to 0.5 bar, preferably 0.25 to 0.45 bar, specifically from 0.27 to 0.43 bar; differential pressure between bottom and top of the stirred tank reactor is preferably at least 0.3 bar, more preferably at least 0.5 bar, most preferably 0.6 bar.

11. A process for producing a water vapor- and smoke-permeable synthetic food casing comprising one or more layers, wherein at least one layer comprises a poly(vinyl alcohol) mixture and a polyamide, by preparing a poly(vinyl alcohol) mixture according to one of claims 1 to 10, wherein the process defined in one of claims 1 to 10 is performed, and (co)extruding the mixtures forming the at least one layer and optionally further layers.

12. The process according to claim 11, in which the casing is a tubular film casing, which is permeable or semi-permeable to smoke and water-vapor, comprising at least one layer (1), which comprises a mixture of at least one semi-aromatic (co)polyamide with at least one water-soluble synthetic organic polymer and optionally at least one plastifier, at least one compatibilizer, at least one mineral additive or mixtures thereof, wherein at least one of the water-soluble synthetic organic polymers is a poly(vinyl alcohol) mixture prepared according to one of claims 1 to 10.

13. The process as claimed in claim 11 or 12, in which the casing is biaxially oriented and thermosetting.

14. The process as claimed in claim 11 to 13, wherein the at least one layer (1) comprises in addition to the polyvinyl alcohol mixture as defined in one of claims 1 to 10 at least one additional water-soluble, synthetic, organic polymer, selected from the group comprising
(i) a partially or completely saponified poly(vinyl alcohol),
(ii) a copolymer having vinyl alcohol units,
(iii) a poly(alkylene glycol),
(iv) a copolymer having alkylene glycol units,
(v) a polyvinylpyrrolidone,
(vi) a copolymer having vinylpyrrolidone units and units of at least one α,β-olefinically unsaturated monomer,
(vii) a homopolymer or a copolymer having units of N-vinylalkylamides and/or
(viii) a (co)polymer of or polymer having units of α,β-unsaturated carboxylic acids or α,β-unsaturated carboxamides,
and mixtures thereof.

15. The process as claimed in one of claims 14 to 16, wherein the at least one layer (1) comprises in addition to the poly(vinyl alcohol) mixture as defined in one of claims 1 to 10 a polyvinylpyrrolidone, wherein preferably the poly(vinyl alcohol) and the polyvinylpyrrolidone are employed in a weight ratio of from 0.1 to 10 : 1.

16. The process as claimed in one of claims 12 to 15, wherein the casing has one or more of the following features:
- the at least one layer (1) comprises a plastifier which is selected from one or more of glycerol, mono- and diglycol, trimethylolpropane, a mono-, di- or triester of glycerol with carboxylic acids, formamide, acetamide, N,N-dimethylformamide or N,N-dimethylacetamide;
- the semi-aromatic (co)polyamide comprises units derived from isophthalic acid and/or terephthalic acid;
- the tubular film has a thickness of from 15 to 70 µm and each layer of the film has a thickness of at least 2 µm;
- the casing has a water-vapor permeability of from 50 to 300 g/m²/day at 23°C and 85% relative humidity;
- the tubular film comprises 2 to 10 layers.

17. The process as claimed in one of claims 12 to 16, in which the casing comprises at least one second layer (2) which comprises a mixture of at least one aliphatic (co)polyamide, preferably selected from one or more of PA 6, PA 6/66, PA 66, PA 6.8, PA 6.9, PA 6.11, PA 11 and PA 12, with at least one water-soluble synthetic organic polymer and no plastifier, wherein preferably the second layer (2) furthermore comprises a semi-aromatic (co)polyamide.

18. A process for preparing a food product, comprising producing a tubular film casing according to any one of claims 12 to 17, and filling it with a solid or paste-like foodstuff, wherein the foodstuff is preferably selected from sausages, cheese and spreadable foodstuff.
